# EUROPEAN PATENT SPECIFICATION

(11) **EP 2 915 987 B1**
(45) Date of publication and mention of the grant of the patent: **21.12.2016**
(21) Application number: 14158281.7
(22) Date of filing: 07.03.2014
(51) Int. Cl.: F02D 41/22, F02D 19/06, F02D 35/02, F02D 41/00

(54) **Evaluating gaseous fuel admission valve operability**
Beurteilung der Funktionstüchtigkeit eines Einlassventils für gasförmigen Brennstoff
Évaluation du fonctionnement de la soupape d'admission pour un carburant gazeux

(43) Date of publication of application: 09.09.2015
(73) Proprietor: Caterpillar Motoren GmbH & Co. KG, 24159 Kiel (DE)
(72) Inventor: SIXEL, Eike Joachim, 24109 Kiel (DE); WESTER, Daniel, 24242 Felde (DE); Stubbs, Adam, Eye, Peterborough, PE6 7PY (GB); Snopko, Michael, 24105 Kiel (DE)
(74) Representative: BRP Renaud & Partner mbB Rechtsanwälte Patentanwälte Steuerberater

(56) References cited:
- WO-A1-99/32775
- DE-A1-102008 007 325
- US-A1- 2005 205 022

## Description

### Technical Field

The present disclosure generally relates to dual fuel internal combustion engines, and more particularly to switching to operating a dual fuel internal combustion engine with gaseous fuel.

### Background

A dual fuel (DF) internal combustion engine can typically operate in a liquid fuel mode (LFM) and in a gaseous fuel mode (GFM). An exemplary DF internal combustion engine is disclosed, for example, in European Patent Application No. 13 174 377.5 by Caterpillar Motoren GmbH & Co. KG, GERMANY, filed on 28 June 2013. In LFM, a liquid fuel, such as Diesel fuel or heavy fuel oil (HFO), is provided as the sole source of energy during combustion via a main liquid fuel injector. In GFM, a gaseous fuel such as natural gas is provided, for example mixed with air in an intake port of a cylinder. Ignition of the gaseous fuel may be performed with a small amount of liquid fuel that is, for example, injected directly into the cylinder via the same main fuel liquid injector or a separate ignition fuel injector.

In DF internal combustion engines, for each cylinder at least one gaseous fuel admission valve, herein also referred to as gas admission valve (GAV) may be positioned between a source of gaseous fuel and an air intake of the engine. When a GAV is opened in GFM, the gaseous fuel passes into the air intake for mixing with the intake air. An example of a solenoid actuated gaseous fuel admission valve is disclosed in European Patent 1 040 264 B1. Solenoid actuated GAV s include a solenoid coil, a movable plate, and stationary plate or disc, whereby a current delivered to the solenoid coil actuates the valve by lifting the movable plate from the stationary plate.

Due to their positioning close to the combustion chamber, GAVs may be susceptible to contamination and increased wear. For example, during operation in LFM, the movable plate of a solenoid actuated GAV may dither on the stationary plate or disc of the closed gaseous fuel admission valve due to the combustion. Thereby, both movable plate and stationary plate or disc may be exposed to an increased wear. Furthermore, GAV may not only open in GFM but may also open during LFM. For example in case of a solenoid actuated GAV, a pressure difference between intake air and the gaseous fuel pipe system during LFM may result in opening. Then, small particulates may get trapped in the valve, for example, between the movable plate and the stationary plate or the seat of the solenoid actuated GAV and the valve may no longer close properly. Wear as well as contamination of the GAV may result in leakage through even a closed GAV or an increased pass rate through an opened GAV during GFM.

Furthermore, WO 99/32775 discloses a method and apparatus for detecting gaseous fuel leakage through a gaseous fuel admission valve within an engine, US 2005/0205022 A1 discloses a gas engine electric power generating system, and DE 10 2008 007 325 A1 discloses a test procedure for ignition fluid injectors.

The present disclosure is directed, at least in part, to improving or overcoming one or more aspects of prior systems.

### Summary of the Disclosure

In an aspect of the present disclosure, a method of evaluating operability of gaseous fuel admission valves of a dual fuel internal combustion engine comprising a plurality of cylinders and at least one gaseous fuel admission valve for each cylinder of the plurality of cylinders is disclosed. The method comprises operating the dual fuel internal combustion engine on liquid fuel; supplying gaseous fuel to the gaseous fuel admission valves at a pressure above an intake manifold air pressure thereby setting a differential gas pressure across the gaseous fuel admission valves; operating the gaseous fuel admission valves to add gaseous fuel to intake air while operating the dual fuel internal combustion engine primarily on liquid fuel; measuring, for each cylinder of the plurality of cylinders a combustion process parameters; and evaluating operability of the gaseous fuel admission valves based on the measured combustion process parameters.

In another aspect, a method of controlling a switching process from liquid fuel operation to gaseous fuel operation of a dual fuel internal combustion engine comprises performing the above identified method and aborting the switching process as soon as the evaluation of the operability of the gaseous fuel admission valves based on the combustion process parameters indicates an error in the operability.

In another aspect, a dual fuel internal combustion engine comprises a liquid fuel system; a gaseous fuel system; a plurality of cylinders; a gaseous fuel admission valve for each cylinder of the plurality of cylinders, fluidly connecting the gaseous fuel system with the cylinder; a sensor for determining a combustion process parameter for each cylinder of the plurality of cylinders; and a control unit configured to perform, for example, at least one of the above identified methods.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary DF internal combustion engine operable inter alia partly on gaseous fuel;
Fig. 2 shows a schematic cross-sectional view of a cylinder of a DF internal combustion engine;
Fig. 3 shows a flow diagram of an exemplary switching process from a liquid fuel operation to a gaseous fuel operation of a DF internal combustion engine using inter alia an exemplary method of evaluating GAV operability; and
Fig. 4 shows an exemplary time-pressure diagram of the cylinder pressure during combustion.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

As indicated above, GAVs of DF internal combustion engines may become contaminated or worn out. Contamination may be caused as the GAVs may not only open in GFM but also during LFM. For example in case of a solenoid actuated GAV, a pressure difference between intake air and the gaseous fuel pipe system during LFM may result in opening. Then, small particulates may get trapped in the valve, for example, between the movable plate and the stationary plate or the seat of the solenoid actuated GAV and the valve may no longer close properly. Similarly, during operation in LFM, particulates can accumulate close to the GAV at the intake air side. Then, if the DF internal combustion engine switches from LFM to GFM, the GAV will open in a first step of the transition (for example still at 100 % of power provided by liquid fuel) and those particulates may be pulled into the valve, resulting potentially again in improperly closing due to, for example, the dirt being stuck between the plates.

The present disclosure may be based in part on the realization that not properly operating GAVs may lead to a sudden and massive overfilling of the respective cylinder with gaseous fuel when enabling GFM. This may result in severe damage to the engine. Thus, it was realized that evaluating the operability of GAVs prior and during switching to GFM may allow avoiding operation with one or more malfunctioning GAVs.

The present disclosure may further be based in part on the realization that evaluating the operability of GAVs before fully enabling the gaseous fuel supply system may be done using cylinder-specific combustion process parameters such as cylinder pressure measurements. Specifically, a malfunctioning GAV will provide, for example, too much gaseous fuel to a cylinder - in comparison to those GAVs operating properly. Then, a fuel amount that is larger than for the other cylinders will be combusted and result in a deviating combustion process parameter such as an increased pressure value (e.g. an increased mean pressure and/or an increased peak pressure) and/or an energy value (e.g. cylinder power, the indicated mean effective pressure (IMEP), and /or the heat release rate) of the respective cylinder.

The combustion process parameter may be determined based on the cylinder pressure, exhaust port temperature, fluctuation of engine speed or measurement of the combustion duration (burn rate) with an ionization detection sensor. The combustion process parameter may further be associated with a single combustion cycle or derived for multiples combustion cycles.

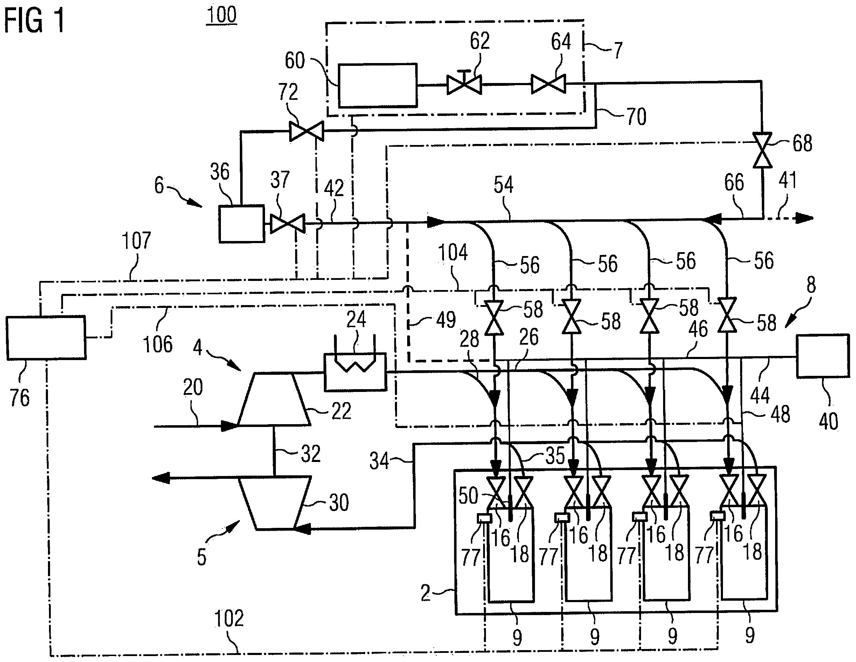

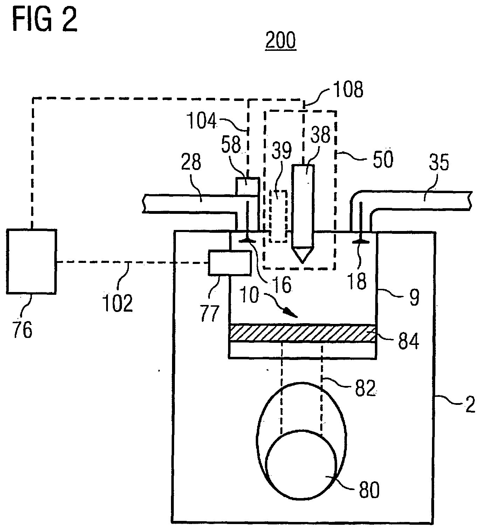

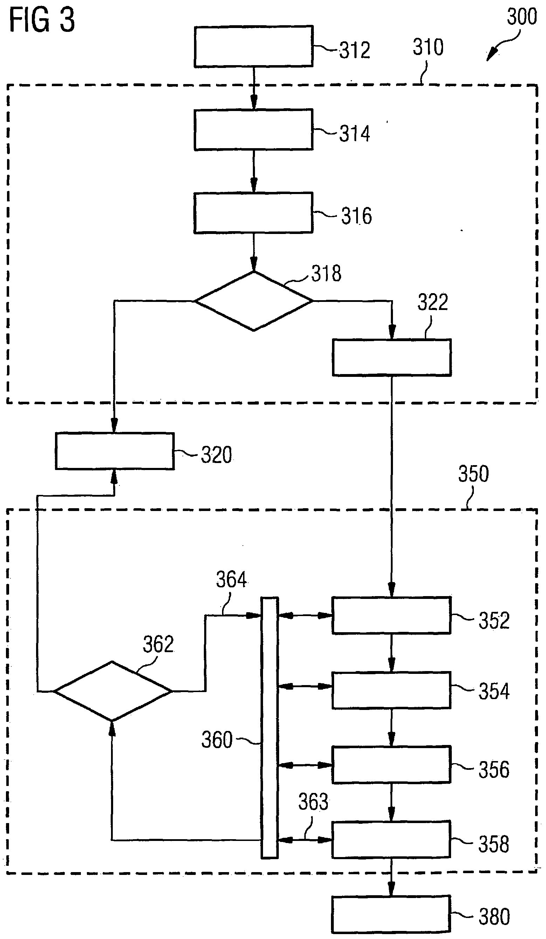

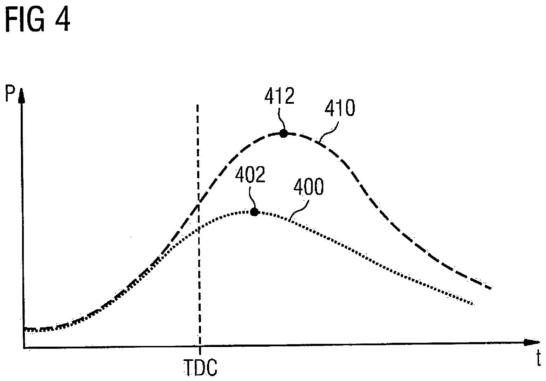

In the following, internal combustion engines operable on liquid fuel and gaseous fuel are described in connection with Figs. 1 and 2. An exemplary method for controlling the change from liquid fuel to gaseous fuel operation of a DF internal combustion engine that is inter alia based on a method for evaluating operability of gaseous fuel admission valves is exemplarily described in connections with Figs. 3 and 4.

Internal combustion engine 100 comprises an engine block 2, a charge air system 4, an exhaust gas system 5, a gaseous fuel system 6 including a purge gas system 7, and a liquid fuel system 8. Internal combustion engine 100 can be powered with a liquid fuel such as, for example, Diesel fuel in LFM, and in GFM with a gaseous fuel such as natural gas, provided for example by an LNG-system.

Engine block 2 comprises a plurality of cylinders. Exemplarily, four cylinders 9 are depicted in Fig. 1. Engine block 2 may be of any size, with any number of cylinders, such as 6, 8, 12, 16, or 20, and in any configuration, for example, "V," in-line, or radial configuration.

Each cylinder 9 is equipped with at least one inlet valve 16 (e.g. two) and at least one outlet valve 18 (also e.g. two). Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinders 9.

Charge air (also referred to as inlet air) is provided by charge air system 4 including an air intake 20, a compressor 22 to pressurize the air, and a charge air cooler 24. A (charge air) inlet manifold 26 is fluidly connected downstream of charge air cooler 24 and guides charge air via cylinder specific inlet channels 28 into respective cylinders 9. Within inlet manifold 26, the pressure is set by compressor 22 and is also referred to as inlet manifold air pressure (IMAP).

Exhaust gas system 5 includes an exhaust gas turbine 30 connected to compressor 22 via shaft 32 and an (exhaust gas) exit manifold 34 guiding exhaust gas from individual exhaust gas outlet channels 35 to exhaust gas turbine 30.

Charge air system 4 may comprise one or more inlet manifolds 26. Similarly, exhaust gas system 5 may comprise one or more exit manifolds 34.

Exhaust gas turbine 30 and compressor 22 may be part of a single-stage or multi-stage turbocharged system. The turbocharged system allows to modify the common pressure (IMAP) of the charge air provided to inlet manifold 26 within a pre-set range.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering respective cylinders 9.

Operating inlet valves 16 and outlet valves 18 may be subject to cylinder-specific timings, i.e. opening time and closing time and, thus, opening duration during the oscillation of the piston. In dependence of those parameters, the amount of air provided into each cylinder for combustion can be adjusted.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurized state.

The gas valve unit of gaseous fuel system 6 may be configured to allow, to block, and to control flow from the gaseous fuel tank into gaseous fuel piping 42. The gas valve unit may comprise gaseous fuel control valves, gaseous fuel shut-off valves and venting valves.

As shown in Fig. 1, gaseous fuel piping 42 is fluidly connected to a gaseous fuel manifold 54 which comprises a plurality of gaseous fuel channels 56. Each gaseous fuel channel 56 is fluidly connected to one of the plurality of inlet channels 28. To dose gaseous fuel into individual inlet channels 28, for example, in each gaseous fuel channel 56, a gaseous fuel admission valve (GAV) 58 is installed. In some embodiments, internal combustion engine 100 may comprise more than one gaseous fuel manifold 54.

Accordingly, in the embodiment of Fig. 1, gaseous fuel system 6 includes the following volumes that are filled with gaseous fuel during GFM: the gas valve unit and the gaseous fuel tank of gaseous fuel source 36; separable therefrom via a valve 37, gaseous fuel piping 42, and gaseous fuel manifold 54 with gaseous fuel channels 56. Each gaseous fuel channel 56 is fluidly connectable to the respective inlet channels 28 of inlet manifold 26 by respective GAV 58.

Each GAV 58 is configured to allow or to block flow of gaseous fuel into an individual inlet channel 28 to mix with compressed charge air from charge air system 4 in GFM. For example, cylinder specific mixing zones downstream of GAV 58 are provided. For example, GAV 58 may be solenoid actuated plate valves in which springs hold a lower surface of a movable disk against an upper surface of a stationary disk or plate, the two surfaces being configured to provide a sealed relationship in a closed state of GAV 58. Each GAV 58 may be mounted to a cylinder head covering at least one cylinder 9.

In general, the amount of gaseous fuel provided to a respective cylinder determines the cylinder-specific power output. During operation, the amount of provided gaseous fuel may depend on the pressure situation upstream and downstream of GAV 58 (differential gas pressure across the gaseous fuel admission valve 58) as well as the opening times of the same.

In the embodiment shown in Fig. 1, purge gas system 7 comprises a purge gas tank 60, a purge gas control valve 62, and a purge gas shut-off valve 64 connected in series. Purge gas tank 60 constitutes a purge gas source to flush gaseous fuel system 6 including gaseous fuel piping 42, gaseous fuel manifold 54, etc. with a purge gas such as nitrogen in a pressurized state. During LFM, for safety reasons, piping close to the engine is freed from gaseous fuel and, thereby, air and water may enter the piping during LFM. Prior filling the freed sections of gaseous fuel system 6 with gaseous fuel, flushing the same with, for example, nitrogen is done for safety considerations to, e.g., remove any air (and thus oxygen) and moisture (water condensate) there from. For the flushing, relief valves, which may be provided at various positions of the gaseous fuel system, may be opened and the content may be flushed to secure location(s) via relief paths such as a relief path 41 exemplarily shown in Fig. 1. In some operational procedures, also gaseous fuel admission valve 58 may be used as a flushing exit, thereby releasing the purge gas and/or a mixture of purge gas with gaseous fuel into the charge air.

Purge gas system 7 may be fluidly connected to gaseous fuel system 6 at various locations. For example, in Fig. 1 a first connection 66 is disposed proximal to gaseous fuel manifold 54. A second connection 70 is disposed at or proximal to gaseous fuel source 36. First shut-off valve 68 and second shut-off valve 72 can block or allow a purge gas flow through first connection 66 and second connection 70, respectively. Additional connections may be integrated to selectively flush various section of the gaseous fuel system 6 such as the gas valve unit of gaseous fuel source 36.

Referring again to Fig. 1, liquid fuel system 8 comprises a liquid fuel tank 40 connected to a liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example Diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM. In some embodiments, the liquid fuel for ignition may contribute up to, for example, 5% or 10 % or more of the fuel amount being combusted in GFM.

Liquid fuel piping 44 is fluidly connected to a liquid fuel manifold 46 having a plurality of liquid fuel inlet channels 48. To dose liquid fuel into the combustion chamber of cylinder 9, in each liquid fuel inlet channel 48 a fuel injection system 50 is installed.

In some embodiments of a DF internal combustion engine, GFM may be based on a spark ignited gaseous fuel combustion and fuel injection system 50 may be fluidly connected to gaseous fuel source 36 (indicated by a dashed line 49 in Fig. 1). In that embodiment, fuel injection system 50 may comprise a pre-combustion chamber for providing spark ignited pilot flames (not shown) to ignite the mixture of gaseous fuel and air. In some embodiments of spark ignition, the pre-chamber ignition may contribute, for example, in the range from 2 % to 8 % such as 5 % of the fuel amount being combusted.

As further shown in Fig. 1, internal combustion engine 100 comprises a plurality of pressure sensors 77, (at least) one for each cylinder 9. Each pressure sensor 77 is configured to generate a signal corresponding to a temporal development of an internal cylinder pressure during operation of the engine, for example during the scavenging phase and/or combustion. The pressure sensor is further described when referring to Fig. 2.

To control operation of engine 100, a control unit 76 is provided. Control unit 76 forms part of a control system of the engine. Control unit 76 is configured to receive data of pressure sensor 77 via a readout connection line 102. Control unit 76 may further be configured to control various components of engine 100 such as gaseous fuel admission valves 58 via a control connection line 104 and fuel injection system 50 via a control connection line 106. Control unit 76 may further be configured to control inlet valves 16, outlet valves 18, and via control connection lines 107 purge gas system 7 and the valves of purge gas system 7. In some embodiments, a second control unit may be provided to control the engine operation as mentioned above. Further description of the control system and additional control lines between control unit 76 and other components of the engine, such as the fuel injection system 50, will be given in connection with Fig. 2. In general, the control system may comprise electronic control elements of the control unit 76 as well as mechanical control elements.

In addition or alternatively, control unit 76 may be connected to other sensors not shown in Fig. 1 such as engine load sensors, engine speed sensors, temperature sensor and NOx sensors provided for a common exhaust of the plurality of cylinders. Control unit 76 may also be connected to an operator panel (not shown) for issuing a warning to the operator, indicating a failure of the engine, the switching between modes, or the like.

Exemplary embodiments of fuel injection system 50 for DF internal combustion engines are described in more detail in reference to Fig. 2. Specifically, Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to inlet manifold 26 via inlet channel 28 and to exit manifold 34 via outlet channel 35 (see also Fig. 1). Inlet valve 16 is disposed in inlet channel 28, and outlet valve 18 is disposed in outlet channel 35. GAV 58 controls the passing of gaseous fuel to combustion chamber 10 of cylinder 9.

Fig. 2 further illustrates fuel injection system 50 schematically by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject an ignition amount of liquid (ignition) fuel into combustion chamber 10 to ignite the mixture of gaseous fuel and air. In GFM, fuel injection system 50 may therefore function as a gaseous fuel ignition system. During transitions from LFM to GFM and vice versa, the contribution of liquid fuel to the combustion process is increasingly replaced by a contribution of gaseous fuel to the combustion process and vice versa. Specific control procedures for the transition may be based, for example, on maintaining a respective power output of the engine constant or at least within a pre-set range and perform the transition based, for example, on a predefined transition rate by increasing the opening duration of the solenoid actuated GAVs and reducing the amount of liquid fuel respectively.

In Fig. 2, an exemplary embodiment of such a gaseous fuel ignition system is based on a main liquid fuel injector 38 for injecting into combustion chamber 10 a large amount of liquid fuel in LFM as well as, in GFM, an ignition amount of liquid fuel to ignite the mixture of gaseous fuel and air. In other embodiments, such as for heavy duty DF internal combustion engines, gaseous fuel ignition system may comprise a separate ignition liquid fuel injector 39 to inject the ignition amount of liquid fuel into combustion chamber 10 in GFM.

Cylinder 9 further comprises pressure sensor 77 to measure a temporal development of an internal cylinder pressure during the operation of the engine. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during operation of the engine. For example, pressure sensor 77 may be mounted within a cylinder side wall or at the cylinder head face. Pressure sensor 77 may reach at least partly into the combustion chamber of cylinder 9, for example through a bore in a cylinder side wall. Information on the internal cylinder pressure may additionally or alternatively be provided by pressure analysis of inlet and/or exhaust pressure for each cylinder.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

In general, control unit 76 of an engine as disclosed in connection with Figs. 1 and 2 may be a single microprocessor or multi microprocessors that include means for controlling, among others, an operation of various components of the internal combustion engine. Control unit 76 may be a general engine control unit (ECU) capable of controlling numerous functions associated with the internal combustion engine and/or its associated components. Control unit 76 may include all components required to run an application such as, for example, a memory, a secondary storage device, and a processor such as a central processing unit or any other means known in the art for controlling the internal combustion engine and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

When the internal combustion engine is operated, the pressure situation may vary from cylinder to cylinder with respect to charge air, exhaust, gaseous fuel. Then, also the air provided to the combustion chamber as well as the fuel amount may vary and similarly, the power of the cylinders as well as the respective exhaust pressure.

When switching to GFM, it may be desirable to measure and evaluate one or more combustion process parameters cylinder-specifically and access therefrom the operability of GAVs to avoid switching into GFM with a malfunctioning GAV.

### Industrial Applicability

Exemplary internal combustion engines suited to the disclosed methods are, for example, DF internal combustion engines of the series M46DF and M34DF manufactured by Caterpillar Motoren GmbH & Co. KG, Kiel, Germany. One skilled in the art would appreciate, however, that the disclosed method can be adapted to suit other internal combustion engines as well.

In the following, operation and control of DF internal combustion engines as exemplarily described with reference to Figs. 1 and 2 are disclosed in connection with Figs. 3 and 4. For illustration purposes, the methods are disclosed with reference to structural elements disclosed in connection with Figs. 1 and 2. However, the skilled person will understand that the respective steps can be performed on other embodiments as well.

Referring to Fig. 3, a flow chart of an exemplary switching process 300 from a liquid fuel operation to a gaseous fuel operation of a DF internal combustion engine is illustrated. Switching process 300 includes a first GAV testing phase 310 and a second GAV testing phase 350. Although disclosed in combination and in a specific sequence, those two testing phases are principally independent from each other and, thus, may be performed independently from each other.

Switching process 300 starts at operating DF internal combustion engine 100 in LFM (step 312). Then, a control signal to switch to gaseous fuel operation is initiated, for example, by an operator.

As a first step of first GAV testing phase 310, those sections of gaseous fuel system 6 not under pressure by gaseous fuel are flushed with purge gas (step 314). For example, purge gas system 7 is operated to provide pressurized nitrogen via valve 68 to gaseous fuel manifold 54 at a pressure above the charge air pressure (IMAP), specifically at least 0.2 bar such as above 0.5 bar, for example, in a range from 1 bar to 2 bar or even up to 5 bar or more over IMAP. The flushing is maintained by purging the nitrogen, for example, via relief path 41 until it can be assumed that only the purge gas is within gaseous fuel manifold 54 and gaseous fuel channels 56. At the end of the flushing, all valves may be closed to contain the flushed section under the pressurized inert gas.

During the flushing and/or the maintaining under pressurized inert gas, the pressure within the flushed section, e.g. gaseous fuel manifold 54, is monitored (step 316). Then, the detected pressure behavior is compared with an expected pressure behavior that can be assumed for the flushing and/or the maintaining of the pressure (e.g. constant pressure).

During monitoring step 316, an assessment of the pressure is continuously performed (step 318). If a deviation of the measured pressure behavior from the expected pressure behavior is identified, switching process 300 is aborted (step 320). For example, a required purging gas pressure may not be reached due to a leakage in the gas system and/or a GAV. For a leaking (defect) GAV, the leaking purge gas may not affect the combustion process in the respective cylinder such - that at this stage - a damage to the engine is still avoided. Assuming that the first GAV testing phase 310 was completed successfully, purge gas valves are closed (step 322), in particular gas valve 68 to prepare the system for gaseous fuel operation.

At this stage, it can be continued with second GAV testing phase 350. However, as previously indicated first GAV testing phase 310 may not be performed or a similar testing may be performed as long as a similar starting condition for second GAV testing phase 350 is reached.

In second GAV testing phase 350, at first the pressure of the inert gas filling is provided at an over pressure with respect to the charge air pressure. The over pressure is, for example, at least 0.1 bar, specifically, for example, in the range from 0.02 bar to 0.2 bar (step 352). Coming from first GAV testing phase 310, that over pressure may be adjusted by opening one of the flushing valves and/or by operation of one or more of GAVs 58, thereby releasing the purge gas into the respective cylinders.

Then, the gaseous fuel supply is opened, while maintaining the set-over pressure, for example, in the range of 0.02 bar to 0.2 bar or up to 0.5 bar (step 354). (This corresponds essentially to the beginning of the transition into GFM.)

Accordingly, from now on, opening GAVs 58 will add gaseous fuel to the combustion process in the plurality of cylinders 9. GAVs 58 may initially be operated with short opening times. The opening may be performed for all of the GAVs 58 or for a sub-group comprising at least two GAVs 58. In Fig. 3, operation of GAVs 58 is indicated as step 356.

Assuming a proper operability of GAVs 58, the opening times of the same will be increased, while the provided liquid fuel will be reduced (step 358). Moreover, the pressure within gaseous fuel system 6, in particular gaseous fuel manifold 54 and gaseous fuel channel 56 is increased to GFM operation level.

Assuming further that still no error of the GAVs 58 occurred and operation of DF internal combustion engine 100 is performed only on gaseous fuel, the switching process is completed and GFM operation is taking place (step 380).

Referring now to the evaluation of the operability of GAVs, the evaluation can be performed from the beginning, i.e. already during step 352, as well as when gaseous fuel is supplied in step 354.

The evaluation is based on measuring at least one combustion process parameter for each cylinder for which the evaluation of the GAV is to be performed (step 360). The continuous monitoring of the combustion process parameter during the various steps is indicated by arrows 363. In the context of the evaluation, continuously monitoring includes monitoring the combustion process parameter for all times throughout a combustion cycle, for a temporal section of the combustion cycle, or for a specific sequence of combustion cycles that may exclude combustion cycles as long as the gained parameters allow reacting to a malfunctioning GAV in line with the required response speed.

In general, the combustion process parameters may be measured for only a subset of cylinders if, for example, only that subset should be changed to gaseous fuel mode. However, in general the complete engine will be switched to GFM and, accordingly, all GAVs 58 will be operated and all respective combustion process parameters will be measured.

Based on the measured combustion process parameters, an evaluation of the operability of GAVs 58 is performed (step 362). If the evaluation results in an indication that at least one of GAVs 58 is malfunctioning, switching process 300 is aborted (step 320). As long as the switching process 300 is not aborted or even once it is aborted, the steps of measuring the combustion process parameters may be continued (loop 364).

Evaluation step 362 may comprise comparing individual combustion process parameters with each other or values derived from the measured combustion process parameters or a sub-group of measured data or even with pre-set values. For example, one may determine the measured combustion process parameter for at least one cylinder 9 of the plurality of cylinders 9 to be beyond a threshold value, and therefrom identify the corresponding GAV 58 to be malfunctioning. The threshold value may be based on a mean value of the measured combustion process parameters of all or a sub-group of cylinders. The sub-group may include all cylinder values but the cylinder value which is to be evaluated. For example, the threshold value may define a range around the mean value that indicates correct operability of the respective GAV 58 within that range and malfunction of that GAV 58 outside of that range.

The threshold value may further be pre-set or depend on at least one of an opening time of GAVs 58, the load of the DF internal combustion engine 100, and temperature conditions.

With respect to switching process 300, the following specific embodiments may be applied. The combustion process parameter may be a pressure value such as a mean pressure or a pressure peak as well as an energy value derived from detected pressure values such as the cylinder power, the indicated mean effective pressure (IMEP) and the heat release weight, each being derivable from pressure values, for example, detected by pressure sensor 77.

In general, the evaluation based on the combustion process parameter may be based on a threshold evaluation or a comparison of the respective values from the remaining GAVs or an average value of the all (or the remaining) measured combustion process parameters. In case of a threshold analysis, the threshold may, for example, depend on the opening time of GAVs 58, the load of the DF engine, the charge air temperature etc.

The pressure may be increased stepwise such that during stationary time intervals, the evaluation of the measured combustion process parameters is performed at a higher accuracy.

With respect to first GAV testing phase 310, the evaluation of the inert gas pressure may be based on searching for increased pressure drop behavior to indicate malfunction of at least one of the gaseous fuel admission valves. In contrast to second GAV testing phase 350, first GAV testing phase 310 may not be cylinder specifically. Thus, the same may be combined with aspects such as separately or stepwise activating gaseous fuel admission valves, thereby adding inert gas to the inlet air and potentially cleaning sealing surfaces of the gaseous fuel admission valves. This, however, may even cause contamination of GAVs. Moreover, pressure behavior monitoring (steps 314-318) be repeated to increase accuracy.

In the following, exemplarily the measuring of the cylinder pressure as an exemplary combustion process parameter is discussed in connection with Fig. 4.

In Fig. 4, exemplary developments of the cylinder pressure during the combustion are shown for a correctly operating GAV (graph 400) and a malfunctioning GAV (graph 410).

Assuming that tested GAVs operate correctly, the respective amounts of fuel (gaseous and liquid fuel contributions) in each cylinder are essentially identical. Accordingly, any correctly operating GAV will result in pressure behaviors similar to graph 400. Graph 400 comprises an increase of pressure up to a certain maximum compression pressure (peak pressure 402), followed by a decay of pressure back to the initial pressure. Usually peak pressure 402 occurs at times later than TDC due to the finite combustion time. For medium speed internal combustion engines, example values for peak pressure 402 are in the range from, for example, 100 bar and 180 bar, respectively.

Assuming now that the malfunctioning results in longer opening times or less tight closing of the GAV, an increased amount of gaseous fuel will be provided to the respective cylinder. Accordingly, in comparison to a correctly operating GAV, more fuel is combusted and the pressure behavior indicated by graph 410 will be measured. In Fig. 4, for illustration the difference is emphasized. For example, peak pressure 412 of graph 410 may be delayed and/or significantly increased in comparison of peak pressure 402 of graph 400. It is noted that in particular for low speed to medium speed engines, already small changes in the pressure behavior can be observed with sufficient accuracy.

In some embodiments where combustion process parameters are derived for a series of combustion events, the combustion process parameters may be derived, for example, for successive combustion events or for every other, third, fourth or any other fraction of combustion events. The combustion process parameters may be derived also only for specific crank angle regions.

The herein disclosed switching procedure can be controlled, for example, using control unit 76. For example, control unit 76 receives the pressure data of the respective cylinders 9 and analyzes the same. The pressure data may be available for discrete times during the combustion cycle, e.g. for 0.1° crank angle, or quasi-continuously depending on the temporal resolution of pressure sensor 77. The combustion process parameter may be derived as a heat release rate of the combustion, for example, by multiplying the received pressure data (graphs 400, 410) with the corresponding cylinder volume using well known equations. As mentioned above, a further example of the combustion process parameter is the indicated mean effective pressure (IMEP) of the cylinder 9, wherein the IMEP is derived by integrating the received pressure data over the period of a combustion cycle. Furthermore, the combustion process parameter may be derived, for example, from a pressure difference between pressure data associated with combustion and pressure data associated with motored operation of the engine.

In some embodiments, threshold level(s) may be stored on the memory of control unit 76 as a fixed value or may be determined based on empirical values typical for the engine. The predetermined combustion threshold level may further depend on further parameters such as the load of the internal combustion engine. In this case, control unit 76 may additionally be connected to, e.g. engine load, sensors configured to receive those parameters.

In some embodiments, a differential gas pressure across gaseous fuel admission valves may not be required for porperly sealing the gaseous fuel admission valves. In those embodiments as well as when the engine is not operating in LFM, suitable pressure ranges for flushing may be above ambient pressure, for example at least 0.2 bar, at least 0.5 bar, or at least 1 bar, for example in the range from 1 bar to 2 bar or even up to 5 bar or more, above the ambient pressure.

As also mentioned above, an efficient and flexible analysis can be based on a comparison between the data received for the various cylinders because those data are in principle independent of further external influences as long those influences affect all cylinders essentially similarly. Thus, specifically comparing one combustion process parameter with an averaged parameter value determined for all (or the remaining) cylinders is proposed.

The herein disclosed aspects are, for example, relevant with respect to the safe operation of marine DF internal combustion engines. For those engines, Marine Class Society may demand specific safety routines when switching between LFM and GFM. First and second GAV testing phases may ensure or at least help that engines such as DF internal combustion engines of the series M46DF and M34DF comply with those regulation by initiating appropriate control steps such as not allowing or terminating the switching process once a malfunctioning GAVs is detected.

As disclosed herein, in general, the operability of GAVs is checked before fully enabling the gas supply and switching to GFM. The herein disclosed concepts relate to the transition from LFM to GFM. During the transition to GFM, the power of the cylinders (e.g. based on the IMEP) is observed. If one cylinder shows a considerably increasing power compared to the average of the cylinders, the transition is stopped immediately. If not, the normal transition proceeds and the GAV opening times and/or the gaseous fuel pressure are increase to the desired value(s).

In some embodiments, to prevent the overshooting of the gaseous fuel pressure in the beginning, the transition to GFM is initiated with no differential gas pressure and, for example, a low gaseous fuel partial pressure. After the beginning of the transition, for example at 1 % gas fraction, the desired differential gas pressure may be increased up to a low level, for example 0.2 bar over inlet air manifold pressure (IMAP). Then, for example at 5 % gas fraction, the differential gas pressure may be ramped up slowly with increasing gas fraction, up to the required level for GFM. In addition or alternatively, the peak firing pressure and/or the heat release can be observed.

The herein disclosed methods for evaluating the operability of GAVs may further allow detection of a blocked GAV. For example, a foreign body may move into or even contamination may accumulate at a position between a mechanical stop and the movable plate of a solenoid actuated GAV and thereby block the GAV in a closed state or in an essentially closed state. Generally when switching from LFM to GFM, increasing the gaseous fuel contribution (and thus reducing the liquid fuel contribution) may result in an essentially unchanged combustion process parameter assuming the output power is maintained essentially constant. Minor changes may occur due to slightly more efficient gas combustion potentially resulting, for example, in slightly reduced heat release. A blocked GAV will affect the IMEP and/or heat release rate as no or at least less than intended gaseous fuel is combusted. Accordingly, for example, IMEP and/or heat release rate, peack pressure etc drop. Thus, monitoring the respective combustion process parameter may allow identifying deviations caused by the blocking from an expected development of the respective measured value or from respective parameters of the remaining cylinders or values derived therefrom.

The herein disclosed methods for evaluating the operability of GAVs may be performed every time before switching from LFM to GFM.

Although the preferred embodiments of this invention have been described herein, improvements and modifications may be incorporated without departing from the scope of the following claims.

## Claims

1. A method of evaluating operability of gaseous fuel admission valves (58) of a dual fuel internal combustion engine (100) comprising a plurality of cylinders (9) and at least one gaseous fuel admission valve for each cylinder (9) of the plurality of cylinders (9), the method comprising:
operating (step 312) the dual fuel internal combustion engine (100) on liquid fuel;
supplying (step 354) gaseous fuel to the gaseous fuel admission valves (58) at a pressure above an intake manifold air pressure thereby setting a differential gas pressure across the gaseous fuel admission valves (58);
operating (step 356) the gaseous fuel admission valves (58) to add gaseous fuel to intake air while operating the dual fuel internal combustion engine (100) primarily on liquid fuel;
measuring (step 360), for each cylinder of the plurality of cylinders a combustion process parameters; and
evaluating (step 362) operability of the gaseous fuel admission valves (58) based on the measured combustion process parameters.

2. The method of claim 1, wherein evaluating (step 362) the operability of the gaseous fuel admission valves (58) comprises:
determining the measured combustion process parameter for at least one cylinder (9) of the plurality of cylinders (9) to be beyond a threshold value; and
identifying the corresponding gaseous fuel admission valve (58) to be malfunctioning.

3. The method of claim 2, wherein the threshold value is based on a mean value of the measured combustion process parameters of all or at least a sub-group of cylinders such as all cylinder values except the at least one cylinder and/or the threshold value that is pre-set or depends on at least one of an opening time of the gaseous fuel admission valves (58), the load of the DF internal combustion engine (100), and temperature conditions.

4. The method of any one of the preceding claims, wherein the combustion process parameter is determined based on the cylinder pressure.

5. The method of any one of the preceding claims, wherein the combustion process parameter is a pressure value such as a mean pressure or a peak pressure and/or an energy value such as the cylinder power, the indicated mean effective pressure, and the heat release rate of the respective cylinder.

6. The method of any one of the preceding claims, wherein the combustion process parameter is associated to a single combustion cycle or derived from data of multiple combustion cycles.

7. The method of any one of the preceding claims, wherein during an initial evaluation phase, the differential gas pressure across the gaseous fuel admission valve (58) is at least 0.02 bar, for example, the differential gas pressure being in the range from 0.02 bar to 0.2 bar or up to 0.5 bar.

8. The method of any one of the preceding claims, further comprising:
increasing, for example continuously or stepwise, a supply pressure of the gaseous fuel and/or an opening time of the gaseous fuel admission valves (58) as long as none of the combustion process parameters is determined to indicate malfunction.

9. A method of controlling a switching process (300) from liquid fuel operation to gaseous fuel operation of a dual fuel internal combustion engine (100) comprising a plurality of cylinders (9) and at least one gaseous fuel admission valve for each cylinder (9) of the plurality of cylinders (9), the method comprising:
performing the method of evaluating operability of gaseous fuel admission valves (58) of a dual fuel internal combustion engine (100) according to any one of the preceding claims; and
aborting (step 320) the switching process (300) as soon as the evaluation of the operability of the gaseous fuel admission valves (58) based on the combustion process parameters indicates an error in the operability.

10. The method of claim 9, further comprising:
increasing, for example continuously or stepwise, a supply pressure of the gaseous fuel and/or an opening time of the gaseous fuel admission valves (58); and,
at the same time reducing, the amount of liquid fuel being provided to the cylinders (9) until the dual fuel internal combustion engine(100) is operated on gaseous fuel only.

11. The method of claim 9 or claim 10, further comprising:
prior supplying gaseous fuel to the gaseous fuel admission valves (58), flushing (step 314) - at least partly - a gaseous fuel supply system (6) with a purge gas at a pressure larger than the inlet manifold air pressure, for example at least 0.2 bar, at least 0.5 bar, or at least 1 bar, for example in the range from 1 bar to 2 bar or even up to 5 bar or more, above the inlet manifold air pressure;
closing (step 316) the gaseous fuel supply system (6) or a section of the same; and
evaluating (step 318) the temporal development of the purge gas pressure.

12. The method of any one of claim 9 to claim 11, further comprising:
when the evaluation of the purge gas pressure indicates malfunction of at least one of the gaseous fuel admission valves (58) in view of an increased pressure drop behavior, activating, for example separately or stepwise the gaseous fuel admission valves (58), thereby adding purge gas to the inlet air and potentially cleaning sealing surfaces of the gaseous fuel admission valves (58); and
repeating the steps of closing (step 316) and evaluating (step 318) the temporal development of the purge gas pressure.

13. The method of any one of claim 9 to claim 12, wherein, when evaluating (step 318) the temporal development of the purge gas pressure indicates operability of the gaseous fuel admission valves, reducing (step 352) the purge gas pressure to provide a differential gas pressure across the gaseous fuel admission valve of, for example, at least 0.02 bar such as to be in the range from 0.02 to 0.2 bar up to 0.5 bar; and /or
initiating replacing the purge gas with gaseous fuel by supplying gaseous fuel to the gaseous fuel admission valves while maintaining the differential gas pressure.

14. A dual fuel internal combustion engine (100), comprising:
a liquid fuel system (8);
a gaseous fuel system (6);
a plurality of cylinders (9);
a gaseous fuel admission valve (58) for each cylinder (9) of the plurality of cylinders (9), fluidly connecting the gaseous fuel system (6) with the cylinder (9);
a sensor (77) for determining a combustion process parameter for each cylinder (9) of the plurality of cylinders (9); and
a control unit (76) configured to perform the method according to any one of the preceding claims.

15. The internal combustion engine (100) of claim 14, further comprising:
a purge gas system (7) for flushing and filling the gaseous fuel system (6) at least partly, e.g. at least upstream of the gaseous fuel admission valves.

## Patentansprüche

1. Ein Verfahren zum Evaluieren der Betreibbarkeit von Einlassventilen (58) für gasförmigen Treibstoff eines Zweistoffverbrennungsmotors (100), der eine Mehrzahl von Zylindern (9) und mindestens ein Einlassventil für gasförmigen Treibstoff für jeden Zylinder (9) der Mehrzahl von Zylindern (9) umfasst, welches Verfahren umfasst:
Betreiben (Schritt 312) des Zweistoffverbrennungsmotors (100) mit flüssigem Treibstoff;
Versorgen (Schritt 354) der Einlassventile (58) für gasförmigen Treibstoff mit gasförmigem Treibstoff bei einem Druck über einem Ansaugstutzenluftdruck und dabei Setzen eines Differenzgasdrucks über die Einlassventile (58) für gasförmigen Treibstoff;
Betreiben (Schritt 356) der Einlassventile (58) für gasförmigen Treibstoff, um gasförmigen Treibstoff zu der Ansaugluft hinzuzufügen, während der Zweistoffverbrennungsmotor (100) primär mit flüssigem Treibstoff betrieben wird;
Messen (Schritt 360) eines Verbrennungsprozessparameters für jeden Zylinder der Mehrzahl von Zylindern; und
Evaluieren (Schritt 362) der Betreibbarkeit der Einlassventile (58) für gasförmigen Treibstoff auf Grundlage des gemessenen Verbrennungsprozessparameters.

2. Das Verfahren nach Anspruch 1, wobei
das Evaluieren (Schritt 362) der Betreibbarkeit der Einlassventile (58) für gasförmigen Treibstoff umfasst:
Bestimmen, ob der gemessene Verbrennungsprozessparameters für mindestens einen Zylinder (9) der Mehrzahl von Zylindern (9) größer als ein Schwellwert ist; und
Identifizieren des entsprechenden Einlassventils (58) für gasförmigen Treibstoff als fehlfunktionierend.

3. Das Verfahren nach Anspruch 2, wobei
der Schwellwert auf einem Mittelwert der gemessenen Verbrennungsprozessparameter von allen oder mindestens einer Untergruppe von Zylindern basiert, wie etwa der Werte aller Zylinder außer des mindestens einen Zylinders und/oder
der Schwellwert voreingestellt ist oder von mindestens einem der Folgenden abhängt: Einer Öffnungszeit der Einlassventile (58) für gasförmigen Treibstoff, der Last des Zweistoffverbrennungsmotors (100) und Temperaturbedingungen.

4. Das Verfahren nach einem der voranstehenden Ansprüche, wobei
der Verbrennungsprozessparameter auf Grundlage des Zylinderdrucks bestimmt wird.

5. Das Verfahren nach einem der voranstehenden Ansprüche, wobei der Verbrennungsprozessparameter
ein Druckwert, wie etwa ein Mitteldruck oder ein Höchstdruck und/oder ein Energiewert, wie etwa die Zylinderleistung, der angezeigte mittlere effektive Druck und die Wärmeabgaberate des entsprechenden Zylinders,
ist.

6. Das Verfahren nach einem der voranstehenden Ansprüche, wobei
der Verbrennungsprozessparameter zu einem einzelnen Verbrennungszyklus zugehörig oder aus Daten mehrerer Verbrennungszyklus abgeleitet ist.

7. Das Verfahren nach einem der voranstehenden Ansprüche, wobei
der Differenzgasdruck während einer anfänglichen Evaluierungsphase über das Einlassventil (58) für gasförmigen Treibstoff mindestens 0,02 bar beträgt, wobei der Differenzgasdruck zum Beispiel in dem Bereich von 0,02 bar bis 0,2 bar liegt oder bis zu 0,5 bar beträgt.

8. Das Verfahren nach einem der voranstehenden Ansprüche, ferner umfassend:
Erhöhen eines Versorgungsdrucks des gasförmigen Treibstoffs und/oder einer Öffnungszeit der Einlassventile (58) für gasförmigen Treibstoff, solange keiner der Verbrennungsprozessparameter bestimmt ist, um Fehlfunktionen anzuzeigen.

9. Ein Verfahren zum Regeln eines Umschaltprozesses (300) von flüssigem Treibstoffbetrieb nach gasförmigem Treibstoffbetrieb eines Zweistoffverbrennungsmotors (100), der eine Mehrzahl von Zylindern (9) und mindestens ein Einlassventil für gasförmigen Treibstoff für jeden Zylinder (9) der Mehrzahl von Zylindern (9) umfasst, welches Verfahren umfasst:
Durchführen des Verfahrens zum Evaluieren der Betreibbarkeit von Einlassventilen (58) für gasförmigen Treibstoff eines Zweistoffverbrennungsmotors (100) nach einem der voranstehenden Ansprüche; und
Abbrechen (Schritt 320) des Umschaltprozesses (300), sobald die Evaluierung der Betreibbarkeit von Einlassventilen (58) für gasförmigen Treibstoff auf Grundlage der Verbrennungsprozessparameter einen Fehler in der Betreibbarkeit anzeigt.

10. Das Verfahren nach Anspruch 9, ferner umfassend:
Erhöhen, zum Beispiel kontinuierlich oder schrittweise, eines Versorgungsdrucks des gasförmigen Treibstoffs und/oder einer Öffnungszeit des Einlassventils (58) für gasförmigen Treibstoff, und
gleichzeitig Verringern der Menge von flüssigem Treibstoff, die den Zylindern (9) bereitgestellt wird, bis der Zweistoffverbrennungsmotor (100) lediglich mit gasförmigem Treibstoff betrieben wird.

11. Das Verfahren nach Anspruch 9 oder Anspruch 10, ferner umfassend:
Bevor die Einlassventile (58) für gasförmigen Treibstoff mit gasförmigem Treibstoff versorgt werden, Fluten (Schritt 314) - mindestens teilweise - eines Versorgungssystems (6) für gasförmigen Treibstoff mit einem Spülgas bei einem Druck, der größer ist als der Einlassstutzenluftdruck, zum Beispiel
mindestens 0,2 bar, mindestens 0,5 bar oder mindestens 1 bar,
zum Beispiel in dem Bereich von 1 bar bis 2 bar oder sogar bis zu 5 bar oder höher
über dem Einlassstutzenluftdruck;
Schließen (Schritt 316) des Versorgungssystems (6) für gasförmigen Treibstoff oder eines Abschnitts desselben; und
Evaluieren (Schritt 318) der temporären Entwicklung des Spülgasdrucks.

12. Das Verfahren nach einem der Ansprüche 9 bis 11, ferner umfassend:
Wenn die Evaluierung des Spülgasdrucks eine Fehlfunktion mindestens eines der Einlassventile (58) für gasförmigen Treibstoff in Anbetracht eines erhöhten Druckabfallverhaltens anzeigt, Aktivieren, zum Beispiel getrennt oder schrittweise, der Einlassventile (58) für gasförmigen Treibstoff und dadurch Hinzufügen von Spülgas zu der Einlassluft und potentielles Reinigen von Dichtungsoberflächen der Einlassventile (58) für gasförmigen Treibstoff; und
Wiederholen der Schritte des Schließens (Schritt 316) und des Evaluierens (Schritt 318) der temporären Entwicklung des Spülgasdrucks.

13. Das Verfahren nach einem der Ansprüche 9 bis 12, wobei,
wenn die Evaluierung (Schritt 318) der temporären Entwicklung des Spülgasdrucks die Betreibbarkeit der Einlassventile für gasförmigen Treibstoff anzeigt, Verringern (Schritt 352) des Spülgasdrucks, um einen Differenzgasdruck über das Einlassventil für gasförmigen Treibstoff von zum Beispiel mindestens 0,02 bar bereitzustellen, so dass dieser in dem Bereich von 0,02 bar bis 0,2 bar bis hin zu 0,5 bar liegt; und/oder
Anfangen, das Spülgas mit gasförmigem Treibstoff zu ersetzen, indem die Einlassventile für gasförmigen Treibstoff mit gasförmigem Treibstoff versorgt werden, während der Differenzgasdruck beibehalten wird.

14. Ein Zweistoffverbrennungsmotor (100), umfassend:
Ein System (8) für flüssigen Treibstoff;
ein System (6) für gasförmigen Treibstoff;
eine Mehrzahl von Zylindern (9);
ein Einlassventil (58) für gasförmigen Treibstoff für jeden Zylinder (9) der Mehrzahl von Zylindern (9), welches das (6) für gasförmigen Treibstoff mit dem Zylinder (9) verbindet;
ein Sensor (77) zum Bestimmen eines Verbrennungsprozessparameters für jeden Zylinder (9) der Mehrzahl von Zylindern (9); und
eine Regelungseinheit (76), die eingerichtet ist, um das Verfahren nach einem der voranstehenden Ansprüche durchzuführen.

15. Der Zweistoffverbrennungsmotor (100) nach Anspruch 14, ferner umfassend:
Ein System für Spülgas (7) zum mindestens teilweisen Fluten und Füllen des Systems (6) für gasförmigen Treibstoff, z.B. mindestens stromaufwärts der Einlassventile für gasförmigen Treibstoff.

## Revendications

1. Procédé d'évaluation du fonctionnement de soupapes d'admission de carburant gazeux (58) d'un moteur à combustion interne à deux carburants (100) comprenant une pluralité de cylindres (9) et au moins une soupape d'admission de carburant gazeux pour chaque cylindre (9) de la pluralité de cylindres (9), le procédé comprenant :
le fonctionnement (étape 312) du moteur à combustion interne à deux carburants (100) au carburant liquide ;
l'alimentation (étape 354) en carburant gazeux des soupapes d'admission de carburant gazeux (58) à une pression supérieure à une pression d'air de collecteur d'admission réglant ainsi une pression de gaz différentielle à travers les soupapes d'admission de carburant gazeux (58) ;
le fonctionnement (étape 356) des soupapes d'admission de carburant gazeux (58) pour ajouter du carburant gazeux à de l'air d'admission tout en faisant fonctionner le moteur à combustion interne à deux carburants (100) principalement au carburant liquide ;
la mesure (étape 360), pour chaque cylindre de la pluralité de cylindres d'un paramètres de processus de combustion ; et
l'évaluation (étape 362) du fonctionnement des soupapes d'admission de carburant gazeux (58) sur la base des paramètres de processus de combustion mesurés.

2. Procédé selon la revendication 1, dans lequel l'évaluation (étape 362) du fonctionnement des soupapes d'admission de carburant gazeux (58) comprend :
la détermination du paramètre de processus de combustion mesuré pour au moins un cylindre (9) de la pluralité de cylindres (9) comme dépassant une valeur de seuil ; et
l'identification de la soupape d'admission de carburant gazeux (58) correspondante comme présentant un dysfonctionnement.

3. Procédé selon la revendication 2, dans lequel la valeur de seuil est basée sur une valeur moyenne des paramètres de processus de combustion mesurés de tous ou d'au moins un sous-groupe de cylindres telle que toutes les valeurs de cylindre sauf l'au moins une valeur de cylindre et/ou la valeur de seuil qui est préréglée ou dépend d'au moins un parmi un temps d'ouverture des soupapes d'admission de carburant gazeux (58), la charge du moteur à combustion interne à deux carburants (100), et des conditions de température.

4. Procédé selon l'une quelconque des revendications précédentes, dans lequel le paramètre de processus de combustion est déterminé sur la base de la pression de cylindre.

5. Procédé selon l'une quelconque des revendications précédentes, dans lequel le paramètre de processus de combustion est une valeur de pression telle qu'une pression moyenne ou une pression de pointe et/ou une valeur d'énergie telle que la puissance de cylindre, la pression effective moyenne indiquée, et le taux de dégagement de chaleur du cylindre respectif.

6. Procédé selon l'une quelconque des revendications précédentes, dans lequel le paramètre de processus de combustion est associé à un seul cycle de combustion ou dérivé de données de multiples cycles de combustion.

7. Procédé selon l'une quelconque des revendications précédentes, dans lequel pendant une phase d'évaluation initiale, la pression de gaz différentielle à travers la soupape d'admission de carburant gazeux (58) est d'au moins 0,02 bar, par exemple, la pression de gaz différentielle étant dans la plage de 0,02 bar à 0,2 bar ou jusqu'à 0,5 bar.

8. Procédé selon l'une quelconque des revendications précédentes, comprenant en outre :
l'augmentation, par exemple continue ou par étapes, d'une pression d'alimentation du carburant gazeux et/ou d'un temps d'ouverture des soupapes d'admission de carburant gazeux (58) aussi longtemps qu'aucun des paramètres de processus de combustion n'est déterminé comme indiquant un dysfonctionnement.

9. Procédé de commande d'un processus de commutation (300) du fonctionnement au carburant liquide au fonctionnement au carburant gazeux d'un moteur à combustion interne à deux carburants (100) comprenant une pluralité de cylindres (9) et au moins une soupape d'admission de carburant gazeux pour chaque cylindre (9) de la pluralité de cylindres (9), le procédé comprenant :
la réalisation du procédé d'évaluation du fonctionnement de soupapes d'admission de carburant gazeux (58) d'un moteur à combustion interne à deux carburants (100) selon l'une quelconque des revendications précédentes ; et
l'interruption (étape 320) du processus de commutation (300) dès que l'évaluation du fonctionnement des soupapes d'admission de carburant gazeux (58) sur la base des paramètres de processus de combustion indique une erreur de fonctionnement.

10. Procédé selon la revendication 9, comprenant en outre :
l'augmentation, par exemple continue ou par étapes, d'une pression d'alimentation du carburant gazeux et/ou d'un temps d'ouverture des soupapes d'admission de carburant gazeux (58) ; et,
dans le même temps la réduction, de la quantité de carburant liquide fournie aux cylindres (9) jusqu'à ce que le moteur à combustion interne à deux carburants (100) fonctionne uniquement au carburant gazeux.

11. Procédé selon la revendication 9 ou la revendication 10, comprenant en outre :
avant l'alimentation de carburant gazeux aux soupapes d'admission de carburant gazeux (58), le rinçage (étape 314) - au moins en partie - d'un système d'alimentation de carburant gazeux (6) avec un gaz de purge à une pression supérieure à la pression d'air de collecteur d'admission, par exemple au moins 0,2 bar, au moins 0,5 bar, ou au moins 1 bar, par exemple dans la plage de 1 bar à 2 bar ou même jusqu'à 5 bar ou plus, au-dessus de la pression d'air de collecteur d'admission ;
la fermeture (étape 316) du système d'alimentation de carburant gazeux (6) ou d'une section de celui-ci ; et
l'évaluation (étape 318) du développement temporel de la pression de gaz de purge.

12. Procédé selon l'une quelconque de la revendication 9 à la revendication 11, comprenant en outre :
lorsque l'évaluation de la pression de gaz de purge indique un dysfonctionnement d'au moins une des soupapes d'admission de carburant gazeux (58) au vu d'un comportement de baisse de pression accru, l'activation, par exemple séparée ou par étapes des soupapes d'admission de carburant gazeux (58), ajoutant ainsi du gaz de purge à l'air d'admission et nettoyant potentiellement des surfaces d'étanchéité des soupapes d'admission de carburant gazeux (58) ; et
la répétition des étapes de fermeture (étape 316) et d'évaluation (étape 318) du développement temporel de la pression de gaz de purge.

13. Procédé selon l'une quelconque de la revendication 9 à la revendication 12, dans lequel, lorsque l'évaluation (étape 318) du développement temporel de la pression de gaz de purge indique le fonctionnement des soupapes d'admission de carburant gazeux, la réduction (étape 352) de la pression de gaz de purge pour fournir une pression de gaz différentielle à travers la soupape d'admission de carburant gazeux de, par exemple, au moins 0,02 bar de sorte à être dans la plage de 0,02 à 0,2 bar jusqu'à 0,5 bar ; et/ou
l'amorçage du remplacement du gaz de purge avec du carburant gazeux par l'alimentation de carburant gazeux aux soupapes d'admission de carburant gazeux tout en maintenant la pression de gaz différentielle.

14. Moteur à combustion interne à deux carburants (100), comprenant :
un système de carburant liquide (8) ;
un système de carburant gazeux (6) ;
une pluralité de cylindres (9) ;
une soupape d'admission de carburant gazeux (58) pour chaque cylindre (9) de la pluralité de cylindre (9), reliant fluidiquement le système de carburant gazeux (6) au cylindre (9) ;
un capteur (77) pour la détermination d'un paramètre de processus de combustion pour chaque cylindre (9) de la pluralité de cylindre (9) ; et
une unité de commande (76) configurée pour réaliser le procédé selon l'une quelconque des revendications précédentes.

15. Moteur à combustion interne (100) selon la revendication 14, comprenant en outre :
un système de gaz de purge (7) pour le rinçage et le remplissage du système de carburant gazeux (6) au moins en partie, par exemple au moins en amont des soupapes d'admission de carburant gazeux.
